# EUROPÄISCHE PATENTSCHRIFT

(11) **EP 2 423 029 B1**
(45) Veröffentlichungstag und Bekanntmachung des Hinweises auf die Patenterteilung: **12.08.2020**
(21) Anmeldenummer: 11170880.6
(22) Anmeldetag: 22.06.2011
(51) Int. Cl.: B60L 50/20, B60L 53/14, B60L 53/30, B60L 53/31, B60L 53/64, B60L 1/00, B60L 3/04

(54) **Mobile Ladevorrichtung für Elektrofahrräder, Stromanschlusselement und Ladegerät für Elektrofahrräder**
Mobile charging device for electric bicycles, electrical connection element and charging device for electric bicycles
Dispositif mobile de chargement pour chariot de manutention électrique, élément de connexion électrique et chargeur pour chariot électrique

(30) Priorität: 27.08.2010 DE 102010039855
(43) Veröffentlichungstag der Anmeldung: 29.02.2012
(73) Patentinhaber: Robert Bosch GmbH, 70442 Stuttgart (DE)
(72) Erfinder: Dasbach, Gregor, 14120 Mondeville (FR); Blin, Christophe, 14000 Caen (FR)

(56) Entgegenhaltungen:
- DE-U1-202007 012 506
- US-A- 5 283 513
- US-A- 6 037 746
- US-A1- 2008 006 664
- US-B1- 7 683 585

## Beschreibung

### Stand der Technik

Zum Laden von Elektrofahrrädern sind Netzteile bekannt, die von einem Stromversorgungsnetz versorgt werden und daher zum Laden physisch mit diesem verbunden sind. Jedoch sind Steckdosen eines Stromversorgungsnetzes zum Anschluss eines Elektrofahrrads üblicherweise nur in Garagen zu finden, so dass mobiles Laden nur zur Verfügung steht.

Aus der Druckschrift US 6037746 A ist eine Ladesystem für Elektrofahrräder die an einem KFZ montierte Fahrradträger bekannt. Die Ladesystem ist durch die 12V Zigarettenzunder versorgt.

Auch in dem Druckschrift DE 19 952 813 A1 ist eine Ladevorrichtung für elektrisch betriebene Kleinfahrzeuge bekannt, die von einem Bordnetz eines Kraftfahrzeugs gespeist wird, und die in einer für das Kleinfahrzeug vorgesehenen Halterung integriert ist. Die Halterung und das Kleinfahrzeug sind in dem Fahrzeug vorgesehen.

Auch die Druckschrift DE 87 12 587 U1 beschreibt, ein elektrisch betriebenes Kleinfahrzeug, d.h. ein Elektrofahrrad, in einem Kraftfahrzeug unterzubringen, d.h. in einem Kofferraum, um dieses unterstützt vom Bordnetz des Kraftfahrzeugs zu laden.

Die Anordnung der Elektrofahrräder in einem Kofferraum oder in einem Teil des Kraftfahrzeugs beschränkt die Anwendung auf kleine bzw. zerlegbare Fahrräder, oder beschränkt den Einsatz auf Fahrzeuge mit großem Laderaum. Ferner muss eigens eine Anzapfung an das Bordnetz im Inneren des Fahrzeugs geschaffen werden, wobei dies erfordert, Kabel zu verlegen, den zugehörigen Sicherungskasten zu erweitern, bestehende Kabel bzw. Kabelkanäle zu manipulieren usw. Es ist daher eine Aufgabe der Erfindung eine mobile Ladevorrichtung für Elektrofahrräder vorzusehen, die nicht auf bestimmte, kleine Elektrofahrräder beschränkt ist und deren Anwendung insbesondere keine aufwändigen Manipulationen am Bordnetz eines Kraftfahrzeugs erfordert. Insbesondere ist es wünschenswert, eine Lösung für Kleinwagen vorzusehen, bei denen das Fahrrad (allgemein: das zu ladende Kleinfahrzeug) im Fahrzeuginneren keinen Platz findet.

### Offenbarung der Erfindung

Diese Aufgabe wird gelöst durch eine mobile Ladevorrichtung, einem Stromanschlusselement und einem Ladegerät für Elektrofahrräder gemäß den unabhängigen Ansprüchen.

Die Erfindung kann besonders einfach und ohne Werkzeug mit dem Fahrzeug verbunden werden. Es sind keinerlei Elektromontagearbeiten notwendig, wobei die Umsetzung auch deshalb besonders kostengünstig und einfach ist, weil auf bereits bestehende Komponenten zurückgegriffen werden kann. Es ist nicht notwendig, das Elektrofahrrad zu zerlegen und in einen Kofferraum / Innenraum eines Kraftfahrzeugs zu legen, um einen Ladeanschluss an das Elektrofahrrad anzustecken. Vielmehr wird durch die Erfindung kein wertvoller Transportraum belegt und es können auch größere Elektrofahrräder ohne Zerlegung bordnetzgestützt geladen werden. Daher kann die Erfindung angewendet werden, ohne dass das Fahrzeug in den Transportraum hinein gelegt und dort befestigt werden muss, wobei dies insbesondere bei schwereren Fahrrädern schwierig von Hand zu bewerkstelligen ist und das Kraftfahrzeugs auch bei sorgsamen Umgang von dem Fahrrad beschädigt werden kann (Lackschäden etc.).

Die erfindungsgemäße Ladevorrichtung kann unabhängig von der Fahrzeuggröße und Art des Fahrzeugs eingesetzt werden. Sie kann z.B. bei Fahrzeugen ohne großen Innenraum realisiert werden, z.B. Coupes und Kleinwagen. Gleichermaßen ist das Elektrofahrrad hinsichtlich der Größe nicht von einer inneren Größe des Kraftfahrzeugs beschränkt.

Es ist ein grundlegendes Element der Erfindung, das (außerhalb des Fahrzeugs vorliegende) Ladegerät an einem Punkt außerhalb des Kraftfahrzeugs mit dem Bordnetz des Kraftfahrzeugs zu verbinden. Dadurch kann das Elektrofahrzeug außen am Kraftfahrzeug befestigt werden und mit dem Bordnetz verbunden werden, ohne dass etwa ein Kabel durch die Fahrzeugverkleidung (oder durch eine Anhängerwand) hindurch vorgesehen werden muss. Insbesondere kann das Bordnetz des Kraftfahrzeugs mit dem Ladegerät über eine am Äußeren des Kraftfahrzeugs angeordnete Buchse verbunden werden, so dass lediglich eine Steckverbindung hergestellt werden muss, um das Ladegerät an die Bordnetzversorgung anzuschließen. Wird die elektrische Buchse verwendet, mit der Anhänger elektrisch versorgt werden, so kann auf bereits weitreichend erhältliche elektrische Steckersysteme zurückgegriffen werden, wobei insbesondere keinerlei Arbeiten am Bordnetz erforderlich sind. Die Erfindung sieht vor, das das Bordnetz eines Kraftfahrzeugs von außerhalb des Kraftfahrzeugs nutzbar gemacht wird, d.h. elektrische Verbindungselemente vorgesehen werden, die mit dazu komplementären Verbindungselementen an einer Außenseite eines Kraftfahrzeugs verbunden werden können. Ein derartiges Verbindungselement an einer Außenseite eines Kraftfahrzeugs ist insbesondere die elektrische Schnittstelle zum elektrischen Anschluss von Anhängern, die üblicherweise genormt ist, so dass auf bereits im Markt erhältliche Komponenten zurückgegriffen werden kann. Da eine derartige elektrische Schnittstelle bei jedem Kraftfahrzeug mit Anhängerkupplung bereits vorhanden ist, kann auf jegliche Eingriffe in das Bordnetz des Kraftfahrzeugs verzichtet werden.

Gemäß einem ersten Aspekt der Erfindung wird eine mobile Ladevorrichtung für Elektrofahrräder vorgesehen, wobei die Ladevorrichtung mindestens einen elektrischen Abgabeanschluss umfasst, der zur Verbindung mit einem Ladeanschluss eines Elektrofahrrads oder mit einem Ladegerät für ein Elektrofahrrad eingerichtet ist. Falls das Elektrofahrrad selbst über eine Ladeelektronik verfügt, so ist der Abgabeanschluss zur direkten Verbindung mit einem Ladeanschluss vorgesehen, wodurch sich eine direkte Verbindung zwischen Elektrofahrrad und einem Kfz-Bordnetz ergibt. Falls das Elektrofahrrad keine Ladeelektronik verfügt, so ist der Abgabeanschluss zur Verbindung mit einem Ladegerät vorgesehen, dessen Ausgang über eine Steckverbindung mit dem Elektrofahrrad verbunden werden kann, wodurch sich eine indirekte (da über das Ladegerät vorgesehene) Verbindung zwischen Elektrofahrrad und einem Kfz-Bordnetz ergibt.

Die Ladevorrichtung umfasst ferner ein Kabel mit einem Ende, das mit dem Abgabeanschluss (insbesondere ein Steckverbindungselement) verbunden ist. Ein dazu entgegengesetztes Ende des Kabels weist ein Stromanschlusselement mit elektrischen Verbindungselementen auf, die in Form und Anordnung Verbindungselementen eines anhängerseitigen elektrischen Anhängeranschlusses eines Kraftfahrzeuggespanns (Kraftfahrzeug und Anhänger) entsprechen. Vorzugsweise betrifft diese Entsprechung auch die Anzahl der Verbindungselemente, wobei jedoch auch nur zwei Verbindungselemente vorgesehen sein können, die in Anordnung und Form einem Masseanschluss und einem Pluspolanschluss entsprechen. Zumindest hinsichtlich dieser Belegung (Pluspol / Masse) entsprechen die Verbindungselemente dem anhängerseitigen elektrischen Anhängeranschluss. Durch das Stromanschlusselement kann ein Kfz-Bordnetz von außerhalb eines Kraftfahrzeugs kontaktiert werden, wobei insbesondere ein üblicherweise vorhandener elektrischer Anschluss des Kraftfahrzeugs verwendet werden kann, der außerhalb des Kraftfahrzeugs angeordnet ist, d.h. eine Steckverbindung des elektrischen Teils einer Anhängerkupplung. Da die elektrische Kontaktierung von außerhalb des Kraftfahrzeugs geschieht, kann auch das Elektrofahrrad außerhalb des Fahrzeugs angebracht werden, so dass sich keine Platzprobleme ergeben.

Eine bevorzugte Ausführungsform der Ladevorrichtung sieht vor, dass das Stromanschlusselement mindestens zwei Kontakte aufweist, die gemäß der Norm ISO 11446 oder gemäß einer anderen Norm zur Definition elektrischer Anschlüsse für Anhänger von Kraftfahrzeugen ausgebildet sind. Die zwei Kontakte entsprechen, gemäß der jeweiligen Norm, schaltbaren oder nicht schaltbaren Bordnetzanschlüssen. Die zwei Kontakte entsprechen insbesondere Masse und Dauerpluspotential oder, alternativ, Masse und schaltbares Pluspotential des Anhängeranschlusses. Als Dauerpluspotential wird ein Pluspotential bezeichnet, das dauerhaft mit dem Bordnetz des Kraftfahrzeugs verbunden ist. Als schaltbares Pluspotential wird ein durch einen Zündschalter des Kraftfahrzeugs steuerbares Pluspotential bezeichnet. Je nach Kraftfahrzeug (und Zulassungsland) sind andere, auf das Zulassungsland bezogene Normen heranzuziehen, um die elektrischen Anschlüsse zu definieren. Insbesondere sind die verbindlichen Normen der SAE (insbesondere USA) oder die in Japan geltenden Normen heranzuziehen. Anstatt einer 13-poligen Steckerverbindung nach ISO 11446 kann auch eine 7-polige Steckverbindung (DIN/ISO 1724, DIN 72577) herangezogen werden. Die zwei Kontakte können bei Anwendung der Norm ISO 11446 den folgenden Kontaktnummerpaaren dieser Norm entsprechen: 9/13 (Dauerplus / Masse); 10/11 (schaltbares Pluspotential / Masse); 5/3 (Kennzeichenbeleuchtung rechts / Masse) oder 7/3 (Kennzeichenbeleuchtung links / Masse). Vorzugsweise weist der Abgabeanschluss nur einen Massekontakt und einen schaltbaren oder nicht schaltbaren Pluspolanschluss als elektrische Kontakte auf, wodurch die Komplexität des Abgabeanschlusses verringert ist und Kabel mit nur zwei Adern zur Verbindung verwendet werden können.

Eine besonders einfache Ausführungsform der Erfindung sieht vor, dass das Stromanschlusselement als Zwischenstück vorgesehen ist. Das Zwischenstück hat eine erste Kontaktseite, die ausgebildet ist gemäß einem anhängerseitigen elektrischen Anhängeranschluss, insbesondere als Steckeranschluß (male). Das Zwischenstück hat ferner eine entgegengesetzte, zweite Kontaktseite ausgebildet gemäß einem kraftfahrzeugseitigem elektrischen Anhängeranschluss, insbesondere als Buchsenanschluß (female). Das Zwischenstück dient somit zum Anschluss des Elektrofahrrads / eines Ladegeräts hierfür (mittels einer Anzapfung) und gleichzeitig zum üblichen Anschluss eines Anhängersteckers (d.h. eines anhängerseitigen elektrischen Anhängeranschlusses). Hinsichtlich des Anhängersteckers entspricht das Zwischenstück einer Durchleitung.

Das Zwischenstück weist individuelle elektrische Verbindungen auf, die anhängerseitige und kraftfahrzeugseitige Kontaktelemente des Zwischenstücks jeweils miteinander verbindet und bildet somit eine Durchleitung. Das Zwischenstück weist ferner Anzapfungen auf, die mit den Kontaktelementen verbunden sind. Die Kontaktelemente entsprechen einem Masseanschluss und (schaltbaren oder nicht schaltbaren) Pluspolanschluss des Bordnetzes. Die Anzapfungen sind mit dem Kabel verbunden, welches die Potentiale (Masse / Pluspol) an den Abgabeanschluss weiterleitet.

Die Ladevorrichtung kann nur elektrische Verbindungskomponenten aufweisen (siehe auch vorstehend) oder kann auch mechanische Befestigungskomponenten zur Befestigung des zu ladenden Elektrofahrrads an dem Kraftfahrzeug umfassen, wodurch das Elektrofahrrad von dem Kraftfahrzeug gleichzeitig geladen und transportiert werden kann.

Gemäß dem letztgenannten Aspekt umfasst die erfindungsgemäße Ladevorrichtung eine mechanische Befestigungseinrichtung eingerichtet zur Befestigung einer mechanischen Halterung an ein Kraftfahrzeug. Diese mechanische Befestigungseinrichtung kann insbesondere eine Einrichtung zur Befestigung der Halterung an einer Anhängerkupplung eines Kraftfahrzeugs oder zur Befestigung der Halterung auf einem Dach eines Kraftfahrzeugs sein, wobei die Befestigungseinrichtung auch für weitere Befestigungsstellen an einem Kraftfahrzeug eingerichtet sein kann, beispielsweise (außen) an einem Wohnwagen oder (außen) an einem Anhänger eines Kraftfahrzeuggespanns. Das Kraftfahrzeuggespann wird hierbei als eine Einheit betrachtet und als Kraftfahrzeug bezeichnet.

An der Halterung sind ferner Fahrradhalterelemente vorgesehen, die eingerichtet sind, ein Fahrrad lösbar mit der Halterung mechanisch zu verbinden, beispielsweise Klemmen, Haken und/oder Befestigungsbänder bzw. -seile. Die mechanische Befestigungseinrichtung und die Fahrradhalterelemente können gemäß der entsprechenden Komponenten eines Fahrradträgers für Kraftfahrzeuge (PKW, Wohnwagengespann, Wohnmobil, LKW ...) ausgebildet sein, so dass auf bereits erhältliche Komponenten zurückgegriffen werden kann.

Weiterhin ist vorgesehen, dass die (vorstehend beschriebene) Ladevorrichtung, die mit mechanischen Befestigungskomponenten ausgestattet ist, eine elektrische Rücklichtverbindung zum Anschluss von Rücklichtern der Halterung an den anhängerseitigen elektrischen Anhängeranschluss umfasst. Anstatt oder in Kombination mit der Rücklichtverbindung kann auch eine Schlussleuchtenverbindung, eine Begrenzungsleuchtenverbindung, eine Kennzeichenbeleuchtungsverbindung, eine Ladeverbindung für einen Anhängerakkumulator oder eine Verbindung vorgesehen sein, die diese Verbindungen kombiniert, vorzugsweise als mehradriges Kabel. Da Verkehrselemente wie Schlussleuchten u.a. gesetzlich zur Zulassung für den Straßenverkehr vorgeschrieben sind, weisen übliche Anhänger eine derartige Verbindung auf, so dass auf bereits erhältliche Komponenten zurückgegriffen werden kann.
Das Stromanschlusselement weist ferner elektrische Verbindungselemente zum Anschluss von Rücklichtkontakten (oder weiteren Kontakten, siehe vorgenannte Verbindungen) auf, mit denen die elektrische Rücklichtverbindung (bzw. das mehradrige Kabel) verbunden ist. Dadurch sind der Anschluss der Rücklichter der Halterung und das Stromanschlusselement von einem gemeinsamen Stecker vorgesehen, wobei der Stecker eine Verbindung aufweist zum Anschluss desjenigen Kabels, das zum Elektrofahrrad bzw. zum Ladegerät führt. Die Anzapfung ist hierbei am Stecker vorgesehen, der vorgesehen ist, in den kraftfahrzeugseitigen elektrischen Anhängeranschluss eingesteckt zu werden.

Alternativ umfasst die Ladevorrichtung ein mehradriges Kabel, dessen Adern die elektrische Rücklichtverbindung sowie eine schaltbare oder nicht schaltbare Bordnetzverbindung vorsehen. Das Stromanschlusselement ist in Form von elektrischen Anzapfungen ausgebildet, die diejenigen Adern kontaktiert, welche die Bordnetzverbindung vorsehen. Ferner kann das Stromanschlusselement als eine Fortführung derjenigen Adern ausgebildet sein, welche die Bordnetzverbindung vorsehen. Gemäß diesen Ausführungsformen ist die Anzapfung für das Elektrofahrrad bzw. für das Ladegerät des Elektrofahrrads an einem Verbindungskabel, das durch die Halterung / die erfindungsgemäße Ladevorrichtung führt und das an einem Stecker endet, der in den Anhängeranschluss eines Kraftfahrzeugs eingesteckt werden kann.

Die voranstehend beschriebene erfindungsgemäße Ladevorrichtung mit mechanischen Befestigungselementen sieht gleichermaßen vor, das Elektrofahrrad mechanisch und elektrisch mit dem Kraftfahrzeug zu verbinden. Es kann daher auch als (mechanischer) Fahrradhalter mit Ladevorrichtung angesehen werden. Im Gegensatz zum Begriff Ladevorrichtung wird mit Ladegerät lediglich eine Vorrichtung bezeichnet, die im Wesentlichen nur eine elektrische Verbindung zwischen Elektrofahrrad und Kraftfahrzeug herstellt.

Gemäß einer weiteren Ausführungsform der Erfindung umfasst die erfindungsgemäße Ladevorrichtung (mit oder ohne mechanische Befestigungskomponenten) eine Ladesteuerung eingerichtet zur Steuerung der Ladung eines oder mehrerer Elektrofahrräder. Die Ladesteuerung ist mit dem Abgabeanschluss verbunden, um an diesen Ladestrom zu liefern, der über den Abgabeanschluss dem Elektrofahrrad zugeführt wird. Die Ladesteuerung umfasst vorzugsweise einen Spannungsumsetzer, einen Laderegler, einen Entladeschutz, einen Überstromschutz oder eine Kombination hiervon. Die Ladesteuerung kann ferner ein Bedienelement umfassen, mit dem ein Akkutyp, ein Ladestrom, eine Ladekennlinie oder eine Ladestrategie eingestellt werden kann, um dem Akkumulator des Elektrofahrrads Rechnung zu tragen. Der Entladeschutz ist eingerichtet, ab einer Versorgungsspannung unterhalb eines Schwellwerts, beispielsweise 11 Volt oder 10 Volt eine Stromentnahme vom Bordnetz zu beenden. Der Überstromschutz kann als Einmalsicherung oder automatische Sicherung ausgeführt sein und beendet die Stromentnahme von dem Bordnetz ab einer vorbestimmten Stromstärke.

Gemäß eines weiteren Aspekts der Erfindung wird diese mittels eines Stromanschlusselements vorgesehen, das als Zwischenstück dient. Diese Ausführungsform entspricht einer besonders simplen und platzsparenden Ausführung, bei der der kraftfahrzeugseitige elektrische Anhängeranschluss als elektrische Schnittstelle weitergeführt wird, um den anhängerseitigen elektrischen Anhängeranschluss anschließen zu können. Die Weiterführung wird genutzt, um das Bordnetz anzuzapfen, d.h. um mittels des Zwischenstücks eine Verbindungsanordnung vorzusehen, die mit dem Elektrofahrrad bzw. dem Ladegerät des Elektrofahrrads verbunden werden kann.

Demgemäß wird die Erfindung als ein Stromanschlusselement umgesetzt, das als ein Zwischenstück vorgesehen ist. Das Zwischenstück ist mit einer ersten Kontaktseite ausgebildet gemäß einem anhängerseitigen elektrischen Anhängeranschluss, sowie mit einer entgegengesetzten, zweiten Kontaktseite gemäß einem kraftfahrzeugseitigem elektrischen Anhängeranschluss. Zwischen diesen Seiten erstreckt sich das Zwischenstück, wobei Verbindungen zwischen der ersten und der zweiten Kontaktseite durchgeschleift (und zum Teil angezapft) werden. Die erste und die zweite Kontaktseite bilden zueinander komplementäre elektrische Schnittstellen, wobei die erste Kontaktseite zum Einstecken in einen kraftfahrzeugseitigen elektrischen Anhängeranschluss ausgebildet ist und die zweite Kontaktseite zum Einstecken in einen anhängerseitigen elektrischen Anhängeranschluss ausgebildet ist. Die zweite Kontaktseite gibt die elektrische Schnittstelle wieder, die der kraftfahrzeugseitige elektrische Anhängeranschluss ausbildet. Das Zwischenstück weist individuelle elektrische Verbindungen auf, die anhängerseitige und kraftfahrzeugseitige Kontaktelemente des Zwischenstücks jeweils miteinander verbindet. Dadurch bilden die erste und die zweite Kontaktseite die elektrische Schnittstelle eins zu eins aufeinander ab, jede Kontaktstelle (Pin, Buchse) behält durch das Zwischenstück ihr ursprüngliches Potential bzw. ihre ursprüngliche Funktion.

Das Zwischenstück weist ferner Anzapfungen auf, die mit denjenigen Kontaktelementen (insbesondere der ersten Kontaktseite) verbunden sind, welche Masse und Pluspol (schaltbar oder nicht schaltbar) des Bordnetzes entsprechen. Die Anzapfungen sind mit einer elektrischen Steckverbindungsanordnung verbunden, das sich an dem Zwischenstück befindet. Die elektrische Steckverbindungsanordnung dient als Kontaktpunkt zum Anschluss des Elektrofahrrads (d.h. einer zu diesem oder zu einem Ladegerät führenden Leitung) und ist eingerichtet, lösbar mit einer dazu komplementären Steckverbindungsanordnung eines Ladekabels für Elektrofahrräder verbunden zu werden. Die elektrische Steckverbindungsanordnung ist als eine von außen kontaktierbare Anzapfung des Zwischenstücks zu betrachten, wobei das Zwischenstück lediglich die elektrische Schnittstelle weitergibt, die von dem kraftfahrzeugseitigem elektrischen Anhängeranschluss vorgesehen wird, damit ein anhängerseitiger elektrischer Anhängeranschluss an diese angeschlossen werden kann.

Vorzugsweise ist die an dem Zwischenstück vorliegende Steckverbindungsanordnung an einer Außenseite des Zwischenstücks ausgebildet, vorzugsweise zwischen der ersten und der zweiten Kontaktseite. Das Zwischenstück kann zylinderförmig ausgeformt sein, wobei die Stirnseiten des Zylinders von der ersten und der zweiten Kontaktseite ausgebildet werden und die Steckverbindungsanordnung an der Außenseite der Zylinderwand vorgesehen ist, und sich beispielsweise radial nach außen erstreckt. Die Steckverbindungsanordnung ist seitlich an dem Zwischenstück angeordnet.

Die oben beschriebenen Ausführungsformen sehen vor, dass das Zwischenstück die Anzapfung mittels einer Steckverbindungsanordnung von außen zugänglich macht. Anstatt einer Steckverbindung können hier auch andere, lösbare elektrische Verbindungen verwendet werden. Ferner kann anstatt einer Steckverbindungsanordnung eine Ableitung, beispielsweise ein Ableitungskabel (zum Anschluss an ein Elektrofahrrad oder ein Ladegerät) verwendet werden, das sich von dem Zwischenstück erstreckt und das fest mit diesem verbunden ist.

Ein weiterer Aspekt der Erfindung sieht ein Ladegerät für Elektrofahrräder vor. Das Ladegerät umfasst eine Ladesteuerung und ein damit verbundenes Versorgungskabel. Das Versorgungskabel weist an dem der Ladesteuerung entfernt gelegenen Ende ein Stromanschlusselement mit elektrischen Verbindungselementen auf, die in Form und Anordnung Verbindungselementen eines anhängerseitigen elektrischen Anhängeranschlusses eines Kraftfahrzeuggespanns entsprechen. Das Ladegerät ist vorzugsweise mit Befestigungselementen versehen, mit dem dieses an das Kraftfahrzeug, an das Elektrofahrrad oder an eine Halterung des Elektrofahrrads fixiert werden kann, um das Ladegerät auch während des Transports des Elektrofahrrads am Platz zu halten.

Bevorzugt ist das Stromanschlusselement des Ladegeräts als Zwischenstück ausgebildet, wie es voranstehend beschrieben ist. Das Versorgungskabel des Ladegeräts ist fest mit dem Stromanschlusselement verbunden. Alternativ ist das Versorgungskabel über eine lösbare elektrische Steckverbindung mit dem Stromanschlusselement verbunden, beispielsweise über eine Steckverbindung. Der letztgenannte modulare Aufbau entspricht einer Kombination des Zwischenstücks mit einem Ladegerät, wobei Zwischenstück und Ladegerät miteinander über eine Steckverbindung verbunden sind.

In einer bevorzugten Ausführung der Erfindung erfolgt eine Überwachung des Ladestroms im Bordnetz des Fahrzeugs. In Abhängigkeit vom Ladestrom kann eine Anzeige des Ladezustands der Batterie im Fahrzeuginneren realisiert werden. Ein Strommessgerät kann innerhalb des Fahrzeugs vorgesehen sein, welches den zur Anhängerkupplung fließenden Strom erfasst. Das Strommessgerät ist mit einer Anzeige ausgestattet, die im Inneren des Fahrzeugs angeordnet ist, insbesondere am Armaturenbrett bzw. am Cockpit. Alternativ kann das Strommessgerät im Ladegerät, im Stromanschlusselement oder in der Ladevorrichtung vorgesehen sein, um den Strom zu erfassen, und um ein Signal, das den vom Strommessgerät erfassten Strom wiedergibt, abzugeben, das beispielsweise an eine Anzeigeeinheit am Cockpit zur Anzeige abgegeben wird.

Je nach Bauart der Transporteinrichtung der Fahrräder kann es wünschenswert sein, mehrere Fahrräder gleichzeitig durch Anschluss an den selben kraftfahrzeugseitigen elektrischen Anhängeranschluss zu laden. Dazu werden in einer bevorzugten Ausführung der Erfindung mehrere Ladekabel zum Anschluss an die Elektrofahrzeuge vorgesehen und/oder eine Ladevorrichtung, Stromanschlusselement bzw. Ladegerät umfasst mehrere Abgabeanschlüsse bzw. Steckverbindungsanordnungen, die mit der Anzapfung verbunden sind. Mehrere Abgabeanschlüsse umfassen hierbei mehrere Verbindungskabel, vorzugsweise jeweils ein Verbindungskabel pro Abgabeanschluss.

Das erfindungsgemäße Ladegerät umfasst vorzugsweise eine Ladestromüberwachung. Diese ist eingerichtet, Daten, insbesondere Anzeigedaten betreffend den Ladezustand mindestens eines der anschließbaren Elektrofahrräder, zu erzeugen und in den Innenraum des Fahrzeugs zu übermitteln. Die Übermittlung kann per Funk oder mittels Modulation und Einkopplung in das Bordnetz vorgesehen werden. Das Ladegerät kann daher einen Funktransmitter umfassen oder einen Modulator, der die Daten mittels eines Trägersignals moduliert und in das Bordnetz einspeist. Der Modulator ist vorzugsweise über eine (DC-entkoppelte) Leitung mit dem Stromanschlusselement verbunden.

Durch den Modulator bzw. den Funktransmitter muss keine zusätzliche Datenleitung vom Äußeren des Kraftfahrzeugs in das Innere des Kraftfahrzeugs vorgesehen werden. Ebenso kann die erfindungsgemäße Ladevorrichtung derartige, zur Übermittlung von Daten vorgesehene Komponenten umfassen, um Betriebsparameter der Ladesteuerung in das Innere des Fahrzeugs zu übertragen. Insbesondere können diese Komponenten (d.h. der Funktransmitter oder der Modulator) eingerichtet sein, Betriebsdaten eines Spannungsumsetzers, eines Ladereglers, eines Entladeschutzes, eines Überstromschutzes, einer Strommesseinheit zur Erfassung eines Ladestroms und/oder einer Ladestromüberwachung zur Erfassung des Ladezustands der Ladesteuerung zu übermitteln, beispielsweise den aktuellen Ladestrom, Ladezustand, geflossene Ladung, Ladedauer, Akkumulatorspannung oder-temperatur, eine Warnung bei Betriebsparametern außerhalb eines Normbereichs oder ähnliches. Bei mehreren Abgabeanschlüssen bzw. angeschlossenen Fahrrädern sind diese Daten vorzugsweise gemäß einem Anschluss / einem Fahrrad individualisiert.

### Kurze Beschreibung der Zeichnungen

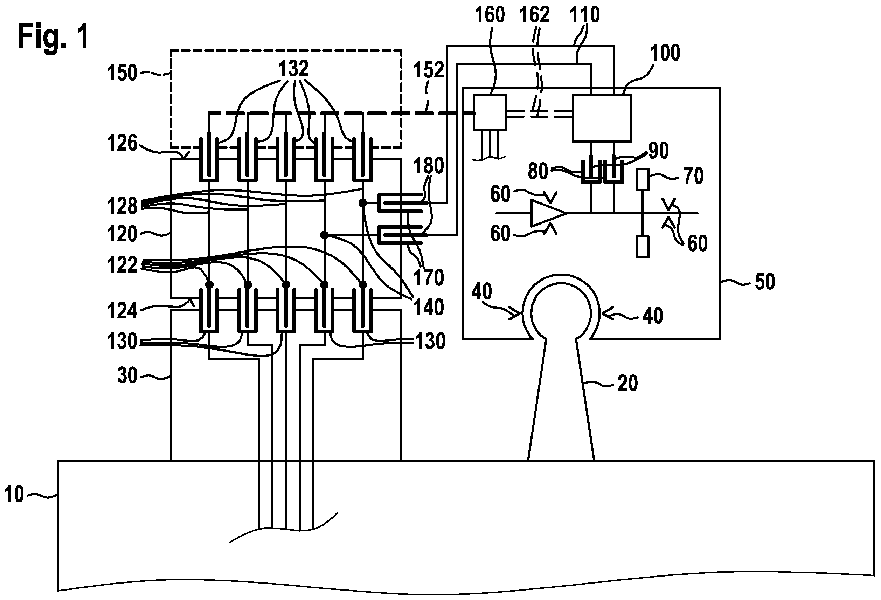

Figur 1 zeigt eine typische Anwendung der Erfindung.

### Ausführungsformen der Erfindung

Die Figur 1 ist die Darstellung einer Anwendung der Erfindung mit einem Kraftfahrzeug 10, von dem nur ein Heckabschnitt dargestellt ist, welcher eine mechanische Anhängerkupplung 20 und einen kraftfahrzeugseitigen elektrischen Anhängeranschluss 30 aufweist. In Figur 1 sind beispielhaft nur fünf Anschlüsse zur besseren Darstellung wiedergegeben, wobei der kraftfahrzeugseitige elektrische Anhängeranschluss 30 vorzugsweise als 13-polige Buchse bzw. Steckdose ausgebildet ist gemäß DIN EN ISO 11465:2004. An der mechanischen Anhängerkupplung ist über eine mechanische Befestigungseinrichtung 40 (symbolisch dargestellt) eine mechanische Halterung 50 angeschlossen. Die Halterung 50 umfasst Fahrradhalterelemente 60 (symbolisch dargestellt), die ein Elektrofahrrad 70 halten. Das Elektrofahrrad 70 umfasst einen Ladeanschluss 80 in Form eines zweipoligen Steckverbindungselements, das als Steckdose (Buchse) ausgebildet ist. In den Ladeanschluss 80 ist ein elektrischer Abgabeanschluss 90 eingesteckt in Form eines Steckverbinders, der komplementär zu dem Ladeanschluss 80 ist.

Ein Ladegerät 100 ist über ein Kabel 110 mit dem kraftfahrzeugseitigen elektrischen Anhängeranschluss 30 verbunden. Wenn das Elektrofahrrad 70 über eine eigene Ladeelektronik verfügt, dann verbindet das Kabel 110 den Ladeanschluss 80 über den Abgabeanschluss 90 des Kabels 110 mit dem kraftfahrzeugseitigen elektrischen Anhängeranschluss 30. Im letzteren Fall ist der Abgabeanschluss 90 an dem Ende des Kabels 110 vorgesehen, das entfernt zu dem Anhängeranschluss 30 angeordnet ist. Bei der Verwendung des Ladegeräts 100 weist ein Anschlusskabel des Ladegeräts den Abgabeanschluss 90 auf.

Das Kabel 110, welches das Ladegerät 100 mit Strom versorgt (oder bei einer Ausführung ohne separates Ladegerät den Ladeanschluss 80 des Elektrofahrrads mit Strom versorgt) weist ein Stromanschlusselement 120 auf, das über elektrische Verbindungselemente 122 (Steckerelemente) verfügt, die komplementär zu Kontaktelementen 130 des kraftfahrzeugseitigen elektrischen Anhängeranschlusses 30 sind. Mit anderen Worten entsprechen die elektrischen Verbindungselemente 122 des Stromanschlusselements 120 in Form und Anordnung den Verbindungselementen eines anhängerseitigen elektrischen Anhängeranschlusses.

In der dargestellten Ausführungsform ist das Stromanschlusselement über eine lösbare Steckverbindung mit dem Kabel 110 verbunden. Ferner ist das Stromanschlusselement 120 als ein Zwischenstück ausgeführt. Das als Zwischenstück ausgeführte Stromanschlusselement 120 weist eine erste Kontaktseite 124 auf, die in Anordnung und Form als anhängerseitiger elektrischer Anhängeranschluss ausgebildet ist. Eine gegenüberliegende zweite Kontaktseite 126 ist hierzu komplementär ausgebildet, d.h. als kraftfahrzeugseitiger elektrischer Anhängeranschluss. Individuelle Verbindungen 128 verbinden die erste und die zweite Kontaktseite 124, 126, d.h. die jeweiligen Kontaktelemente 130 (erste Kontaktseite 124) mit den jeweiligen Kontaktelementen 132 (zweite Kontaktseite 126). Gemäß einer Ausführungsform sind die Kontaktelemente 122, 132 und die Verbindungen 128 einteilig ausgebildet, beispielsweise als geformte Blechstücke. In dem Zwischenstück sind ferner zwei Anzapfungen 140 vorgesehen an den Verbindungen 128, die Masse und Pluspotential führen, d.h. entweder Pins 13 und 9, oder Pins 11, 10 gemäß ISO 11446 oder andere Pins, die Masse und Pluspotential führen, bsp. Schlussleuchtenanschlüsse.

Die Kontaktelemente 132 der zweiten Kontaktseite 126 entsprechen den Kontaktelementen 130 des Anhängeranschlusses 30. Diese Entsprechung ist (allgemein) in Form, Anordnung und elektrischer Belegung. Daher wird an der zweiten Kontaktseite 126 die elektrische Schnittstelle wiedergegeben, die von den Kontaktelementen 130 des Anhängeranschlusses 30 vorgesehen wird. Ein üblicher Anhängerverbindungsstecker 150 (nur symbolhaft dargestellt) verbindet die Halterung 50 elektrisch mit dem Anhängeranschlusses 30 (über das Zwischenstück 120). Die Verbindung ist als Schema gestrichelt dargestellt. Das Stromnetz des Anhängers, schematisch mit Bezugszeichen 160 dargestellt, wird dadurch versorgt, wobei insbesondere die Leuchten der Halterung durch das Stromnetz des Anhängers versorgt werden. Diese Versorgung kann mit bereits erhältlichen, üblichen Mitteln (Anhängerkabel, Anhängerstecker) vorgesehen werden. Die erfindungsgemäße zusätzliche Versorgung des Elektrofahrrads wird über das Zwischenstück 120, die dort vorgesehenen Anzapfungen 140, und das Kabel 110 vorgesehen.

In Figur 1 ist das Zwischenstück nur über lösbare Verbindungen mit den restlichen Komponenten verbunden. Die Anzapfungen 140 sind mit einer Steckverbindungsanordnung 170 verbunden, an die das Kabel 110 über eine dazu komplementäre Steckverbindungsanordnung 180 angeschlossen ist. Die Steckverbindungsanordnungen 170, 180 formen eine lösbare elektrische Steckverbindung. In einer nicht dargestellten Ausführungsform ist das Kabel fest mit dem Zwischenstück verbunden, d.h. die lösbaren Steckkontakte vorgesehen durch Steckverbindungsanordnungen 170, 180 sind durch einen festen Kabelanschluss (Verschraubung, Verklemmung, Lötung) ersetzt.

In einer weiteren Ausführungsform ist das Stromanschlusselement ein vollständig (d.h. mit allen notwendigen Pins) ausgebildeter anhängerseitiger elektrischer Anhängeranschluss wie in Figur 1 mit dem Bezugszeichen 150 dargestellt (gestrichelt). Der anhängerseitige Anhängeranschluss 150 ist in den kraftfahrzeugseitigen Anhängeranschluss 30 eingesteckt (im Gegensatz zu der Darstellung von Figur 1). Der anhängerseitige Anhängeranschluss 150 verbindet über eine mehradrige Leitung 152 (entsprechend einer Rücklichtverbindung der Halterung) den kraftfahrzeugseitigen elektrischen Anhängeranschluss 30 mit dem Stromnetz 160 der Halterung 50. Das Stromnetz 160 kann Anzapfungen des Massepotentials und des Pluspotentials enthalten, und eine daran angeschlossene Versorgungsleitung 162 verbindet diese Potentiale mit dem Ladegerät 100 (oder direkt mit dem Ladeanschluss 80). Die mehradrige Leitung 152 kann ferner Fortführungen des Massepotentials und des Pluspotentials enthalten, die in Form einer Leitung, die der Leitung 162 entspricht, das Ladegerät 100 oder den Ladeanschluss 80 über den Stecker 150 mit dem Bordnetz des Kraftfahrzeugs 10 verbinden. In diesem Fall wird von dem gemäß Norm hergestellten Stecker 150 und durch das daran angeschlossene Kabel (neben der üblichen Verbindung zur Versorgung der Leuchten der Halterung 50) auch eine erfindungsgemäße Zuleitung des KFZ-Bordnetzes an das Elektrofahrrad 70 vorgesehen, wobei die Separierung durch das Bordnetz 160, durch Anzapfungen oder durch Fortführungen der entsprechenden Adern vorgesehen wird, um (neben der Versorgung der Leuchten der Halterung 50) auch das Elektrofahrrad 70 bzw. den Ladeanschluss 80 zu versorgen. Bei dieser Ausführungsform tritt die Leitung 162 an die Stelle der Leitung 110 hinsichtlich der Funktion der Stromversorgung des Ladegeräts / des Ladeanschlusses und die Anzapfung / Abtrennung / Fortführung der Leitung 152 bzw. des Bordnetzes 160 der Fahrradhalterung 50 tritt an die Stelle der Anzapfungen 140 und des Zwischenstücks 120 hinsichtlich der Funktion des Erschließens der Potentiale des KFZ-Bordnetzes. Diese Konzepte können jedoch auch kombiniert werden.

Wenn ein Ladegerät 100 vorgesehen ist, dann ist dieses vorzugsweise in die Halterung 50 integriert bzw. fest mit dieser verbunden. Das Ladegerät kann hierzu Befestigungselemente umfassen. Die Steckverbindungsanordnung 180 am Ende des Zuleitungskabels des Ladegeräts ist vorzugsweise zweipolig und ist insbesondere gemäß einer Norm für Steckverbindungen zur Ausbildung eines Niederspannungs-Gleichstromkontakts ausgebildet.

Die Befestigungselemente 60 und der Abgabeanschluss 90 können mechanisch miteinander verbunden sein.

Die beschriebene Ausführungsform, die ein Zwischenstück 120 umfasst, ist vorzugsweise geeignet für bereits bestehende Fahrradhalterungen, die mit der erfindungsgemäßen elektrischen Kontaktierung (und dem Ladegerät) aufgerüstet werden. Eine Ausführungsform, bei der das Stromanschlusselement über nur zwei Leitungen, d.h. eine Masseleitung und eine Pluspolleitung, mit dem Abgabeanschluss (bzw. dem Ladegerät) verbunden ist, eignet sich insbesondere, wenn das Zwischenstück verwendet wird, oder wenn die Halterung selbst keine Stromversorgung erfordert, da diese ohne Leuchten vorgesehen kann. Derartige Halterungen sind beispielsweise Gestelle zur Befestigung von Fahrrädern an ein Wohnmobil, dessen Schlussleuchten vom eigenen, internen Bordnetz versorgt werden.

Die Halterung 50 umfasst vorzugsweise Fahrradhalterelemente für mehrere Elektrofahrräder. Entsprechend weist das Kabel vorzugsweise mehrere, parallel geschaltete Abgabeanschlüsse 90 auf, wobei ferner die Steckverbindungsanordnung, die Versorgungsleitung oder das Kabel 110 selbst mit mehreren zueinander parallel geschalteten Kabelstücken verbunden ist, die einen (paarigen) Abgabeanschluss 90 für einen Ladeanschluss 80 / für ein Ladegerät 100 aufweisen. Dadurch werden die Anschlussmöglichkeiten vervielfacht, um mehrere (beispielsweise zwei oder drei) Fahrräder gleichzeitig mittels des KFZ-Bordnetzes laden zu können.

Es ist unmittelbar ersichtlich, dass die in Figur 1 dargestellten Komponenten nicht maßstäblich sondern vornehmlich symbolisch dargestellt sind.

## Patentansprüche

1. Mobile Ladevorrichtung für Elektrofahrräder (70), wobei die Ladevorrichtung umfasst: mindestens einen elektrischen Abgabeanschluss eingerichtet zur Verbindung mit mindestens einem Ladeanschluss (80) mindestens eines Elektrofahrrads (70) oder mit einem Ladegerät (100) für mindestens ein Elektrofahrrad, ein Kabel (110) mit einem Ende, das mit dem Abgabeanschluss verbunden ist, wobei ein dazu entgegengesetztes Ende des Kabels ein Stromanschlusselement (120; 150) mit elektrischen Verbindungselementen aufweist, die in Form und Anordnung Verbindungselementen eines anhängerseitigen elektrischen Anhängeranschlusses eines Kraftfahrzeuggespanns entsprechen,
**dadurch gekennzeichnet dass** das Stromanschlusselement als Zwischenstück (120) vorgesehen ist mit einer ersten Kontaktseite (124) ausgebildet gemäß einem anhängerseitigen elektrischen Anhängeranschluss und einer entgegengesetzten, zweiten Kontaktseite (126) ausgebildet gemäß einem kraftfahrzeugseitigem elektrischen Anhängeranschluss, wobei das Zwischenstück individuelle elektrische Verbindungen (128) aufweist, die anhängerseitige und kraftfahrzeugseitige Kontaktelemente des Zwischenstücks jeweils miteinander verbindet und das Zwischenstück ferner Anzapfungen (140) aufweist, die mit den Kontaktelemente verbunden sind, die Masse und Pluspol des Bordnetzes entsprechen, wobei die Anzapfungen mit dem Kabel (110) verbunden sind.

2. Ladevorrichtung nach Anspruch 1, wobei das Stromanschlusselement (120; 150) mindestens zwei Kontakte aufweist, die gemäß der Norm ISO 11446 oder gemäß einer anderen Norm zur Definition elektrischer Anschlüsse für Anhänger von Kraftfahrzeugen ausgebildet sind, wobei die zwei Kontakte gemäß der jeweiligen Norm schaltbaren oder nicht schaltbaren Bordnetzanschlüssen entsprechen, insbesondere Masse und Dauerpluspotential oder Masse und schaltbares Pluspotential, und wobei der Abgabeanschluss nur einen Massekontakt und einen schaltbaren oder nicht schaltbaren Pluspolanschluss als elektrische Kontakte aufweist.

3. Ladevorrichtung nach einem der vorangehenden Ansprüche, ferner umfassend: eine mechanische Befestigungseinrichtung (40) eingerichtet zur Befestigung einer mechanischen Halterung (50) an ein Kraftfahrzeug, insbesondere an eine Anhängerkupplung (20) eines Kraftfahrzeugs (10) oder auf ein Dach eines Kraftfahrzeugs, wobei an der Halterung ferner Fahrradhalterelemente (60) vorgesehen sind, die eingerichtet sind, mindestens ein Fahrrad lösbar mit der Halterung mechanisch zu verbinden.

4. Ladevorrichtung nach Anspruch 3, die ferner eine elektrische Rücklichtverbindung (152) zum Anschluss von Rücklichtern der Halterung an den kraftfahrzeugseitigen elektrischen Anhängeranschluss umfasst, wobei das Stromanschlusselement ferner elektrische Verbindungselemente zum Anschluss von Rücklichtkontakten aufweist, mit denen die elektrische Rücklichtverbindung verbunden ist, wodurch der Anschluss der Rücklichter der Halterung und das Stromanschlusselement von einem gemeinsamen Stecker (150) vorgesehen sind, oder wobei die Ladevorrichtung ein mehradriges Kabel (152) umfasst, dessen Adern die elektrische Rücklichtverbindung sowie eine schaltbare oder nicht schaltbare Bordnetzverbindung vorsehen, wobei das Stromanschlusselement in Form von elektrischen Anzapfungen (162) ausgebildet ist, die diejenigen Adern kontaktiert, welche die Bordnetzverbindung vorsehen, oder das Stromanschlusselement als eine Fortführung derjenigen Adern ausgebildet ist, welche die Bordnetzverbindung vorsehen.

5. Ladevorrichtung nach einem der vorangehenden Ansprüche, ferner umfassend: eine Ladesteuerung (100) eingerichtet zur Steuerung der Ladung eines Elektrofahrrads, wobei die Ladesteuerung mit dem Abgabeanschluss verbunden ist, wobei die Ladesteuerung vorzugsweise einen Spannungsumsetzer, einen Laderegler, einen Entladeschutz, einen Überstromschutz, eine Strommesseinheit zur Erfassung eines Ladestroms, eine Ladestromüberwachung zur Erfassung des Ladezustands oder eine Kombination hiervon umfasst.

6. Stromanschlusselement, das als ein Zwischenstück (120) vorgesehen ist, mit einer ersten Kontaktseite (124) ausgebildet gemäß einem anhängerseitigen elektrischen Anhängeranschluss und einer entgegengesetzten, zweiten Kontaktseite (126) ausgebildet gemäß einem kraftfahrzeugseitigem elektrischen Anhängeranschluss, wobei das Zwischenstück individuelle elektrische Verbindungen (128) aufweist, die anhängerseitige und kraftfahrzeugseitige Kontaktelemente des Zwischenstücks jeweils miteinander verbindet und das Zwischenstück ferner Anzapfungen (140) aufweist, die mit den Kontaktelemente verbunden sind, die Masse und Pluspol des Bordnetzes entsprechen, wobei die Anzapfungen (140) mit mindestens einer elektrischen Steckverbindungsanordnung (170) an dem Zwischenstück verbunden sind, die eingerichtet ist, lösbar mit einer dazu komplementären Steckverbindungsanordnung (180) eines Ladekabels (100) für Elektrofahrräder verbunden zu werden.

7. Stromanschlusselement nach Anspruch 6, wobei die an dem Zwischenstück (120) vorliegende mindestens eine Steckverbindungsanordnung an einer Außenseite des Zwischenstücks zwischen der ersten und der zweiten Kontaktseite (124, 126) ausgebildet ist.

8. Ladegerät für Elektrofahrräder, wobei das Ladegerät (100) eine Ladesteuerung umfasst und ein damit verbundenes Versorgungskabel (110), das an dem der Ladesteuerung entfernt gelegenen Ende ein Stromanschlusselement mit elektrischen Verbindungselementen aufweist, die in Form und Anordnung Verbindungselementen eines anhängerseitigen elektrischen Anhängeranschlusses eines Kraftfahrzeuggespanns entsprechen,
wobei dessen Stromanschlusselement gemäß Anspruch 6 oder 7 als Zwischenstück (120) ausgebildet ist, wobei das Versorgungskabel des Ladegeräts fest mit dem Stromanschlusselement verbunden ist oder über eine lösbare elektrische Steckverbindung (170, 180) mit dem Stromanschlusselement verbunden ist.

9. Ladegerät nach Anspruch 8, ferner umfassend: eine Ladestromüberwachung, wobei die Ladestromüberwachung vorzugsweise eingerichtet ist, Anzeigedaten betreffend den Ladezustand mindestens eines der anschließbaren Elektrofahrräder zu erzeugen und in den Innenraum des Fahrzeugs zu übermitteln.

## Claims

1. Mobile charging device for electric bicycles (70), wherein the charging device comprises: at least one electric output connection configured for connection to at least one charging connection (80) of at least one electric bicycle (70) or having a charger (100) for at least one electric bicycle, a cable (110) with an end which is connected to the output connection, wherein an opposite end of the cable has a power connection element (120; 150) with electric connecting elements which correspond in form and arrangement to connecting elements of a trailer-side electric trailer connection of a motor vehicle combination, **characterized in that**
the power connection element is provided as an intermediate piece (120), with a first contact side (124) embodied according to a trailer-end electrical trailer connection and an opposite, second contact side (126) embodied according to a motor-vehicle-end electrical trailer connection, wherein the intermediate piece has individual electrical connections (128) which respectively connects trailer-end and motor-vehicle-end contact elements of the intermediate piece to one another, and the intermediate piece also has tapping elements (140) which are connected to the contact elements and which correspond to the earth and positive pole of the on-board power system, wherein the tapping elements are connected to the cable (110).

2. Charging device according to Claim 1, wherein the power connection element (120; 150) has at least two contacts which are embodied according to the Standard ISO 11446 or according to another standard for defining electrical connections for trailers of motor vehicles, wherein the two contacts correspond, according to the respective standard, to switchable or non-switchable on-board power system connections, in particular ground and steady plus potential or ground and switchable positive potential, and wherein the output connection has just an earth contact and a switchable or non-switchable positive pole connection as electrical contacts.

3. Charging device according to one of the preceding claims, also comprising: a mechanical attachment device (40) configured to attach a mechanical mount (50) to a motor vehicle, in particular to a trailer hitch (20) of a motor vehicle (10) or to a roof of a motor vehicle, wherein bicycle-securing elements (60) are provided on the mount, which bicycle-securing elements (60) are configured to connect at least one bicycle mechanically and in a detachable fashion to the mount.

4. Charging device according to Claim 3, which also comprises an electrical rear light connection (152) for connecting rear lights of the mount to the motor-vehicle-side electrical trailer connection, wherein the power connection element also has electrical connecting elements for connecting rear light contacts, to which the electrical rear light connection is connected, as a result of which the connection of the rear lights of the mount and the power connection element are provided by a common plug (150), or wherein the charging device comprises a multiconductor cable (152) whose conductors provide the electrical rear-light connection and a switchable or non-switchable on-board system connection, wherein the power connection element is embodied in the form of electrical tapping elements (162) which make contact with those conductors which provide the on-board power system connection, or the power connection element is embodied as a continuation of those conductors which provide the on-board power system connection.

5. Charging device according to one of the preceding claims, also comprising: a charging controller (100) configured to control the charging of an electric bicycle, wherein the charging controller is connected to the output connection, wherein the charging controller preferably comprises a voltage converter, a charging controller, a discharge protection, an overcurrent protection, a current-measuring unit for sensing a charging current, a charging current monitoring means for sensing the state of charge or a combination thereof.

6. Power connection element which is provided as an intermediate piece (120), having a first contact side (124) embodied according to a trailer-end electrical trailer connection and an opposite, second contact side (126) embodied according to a motor-vehicle-side electrical trailer connection, wherein the intermediate piece has individual electrical connections (128) which respectively connect trailer-end and motor-vehicle-end contact elements of the intermediate piece, and the intermediate piece also has tapping elements (140) which are connected to the contact elements and which correspond to the earth and positive pole of the on-board power system, wherein the tapping elements (140) are connected to at least one electrical plug-connection arrangement (170) on the intermediate piece, which arrangement is configured to be connected in a detachable fashion to a plug-connection arrangement (180), which is complementary thereto, of a charging cable (100) for electric bicycles.

7. Power connection element according to Claim 6, wherein the at least one plug-connection arrangement which is on the intermediate piece (120) is formed on an outer side of the intermediate piece, between the first and second contact sides (124, 126).

8. Charger for electric bicycles, wherein the charger (100) comprises a charging controller and a supply cable (110) which is connected thereto and which has, at the end remote from the charging controller, a power connection element with electrical connecting elements which correspond in form and arrangement to connecting elements of a trailer-end electrical trailer connection of a motor vehicle combination,
wherein the power connection element thereof, according to Claim 6 or 7, is embodied as an intermediate piece (120), wherein the supply cable of the charger is fixedly connected to the power connection element or is connected to the power connection element via a detachable electrical plug-type connection (170, 180).

9. Charger according to Claim 8, also comprising: a charging current monitoring means, wherein the charging current monitoring means is preferably configured to generate display data relating to the state of charge of at least one of the connectable electric bicycles and to transmit said data into the passenger compartment of the vehicle.

## Revendications

1. Dispositif de chargement mobile pour vélos électriques (70), le dispositif de chargement comprenant : au moins une borne de sortie électrique conçue pour être reliée à au moins une borne de chargement (80) d'au moins un vélo électrique (70) ou à un chargeur (100) pour au moins un vélo électrique, un câble (110) muni d'une extrémité qui est relié à la borne de sortie, une extrémité du câble, opposée à celle-ci, présentant un élément de branchement électrique (120 ; 150) muni d'éléments de raccordement électriques dont la forme et la disposition correspondent à des éléments de raccordement d'un branchement de remorque électrique côté remorque d'un attelage de véhicule automobile,
**caractérisé en ce que** l'élément de branchement électrique est prévu comme une pièce intermédiaire (120) dont une première face de contact (124) est réalisée selon un branchement de remorque électrique côté remorque et dont une deuxième face de contact (126), opposée, est réalisée selon un branchement de remorque électrique côté véhicule automobile, la pièce intermédiaire présentant des liaisons électriques (128) individuelles qui relient les éléments de contact côté remorque et côté véhicule automobile de la pièce intermédiaire les uns aux autres respectivement, et la pièce intermédiaire présentant en outre des prises (140) qui sont reliées aux éléments de contact qui correspondent à la masse et au pôle positif du réseau de bord, les prises étant reliées au câble (110).

2. Dispositif de chargement selon la revendication 1, dans lequel l'élément de branchement électrique (120 ; 150) présente au moins deux contacts qui sont réalisés selon la norme ISO 11446 ou selon une autre norme définissant des connexions électriques pour des remorques de véhicules automobiles, dans lequel les deux contacts correspondent selon la norme en question à des bornes de réseau de bord commutables ou non commutables, en particulier à la masse et au potentiel positif permanent ou à la masse et à un potentiel positif commutable, et dans lequel la borne de sortie ne présente comme contacts électriques qu'un contact de masse et une borne de pôle positif commutable ou non commutable.

3. Dispositif de chargement selon l'une quelconque des revendications précédentes, comprenant en outre : un dispositif de fixation mécanique (40) conçu pour fixer un support mécanique (50) à un véhicule automobile, en particulier un dispositif d'attelage de remorque (20) d'un véhicule automobile (10) ou à un toit d'un véhicule automobile, des éléments porte-vélo (60) étant prévus en outre sur le support et conçus pour relier mécaniquement de manière amovible au moins un vélo au support.

4. Dispositif de chargement selon la revendication 3, comprenant en outre une liaison électrique de feux arrière (152) pour connecter des feux arrière du support au branchement de remorque électrique côté véhicule automobile, dans lequel l'élément de branchement électrique présente en outre des éléments de liaison électriques pour connecter des contacts de feux arrière auxquels est reliée la liaison de feux arrière électrique, de sorte que la connexion des feux arrière du support et l'élément de branchement électrique sont prévus à partir d'un connecteur commun (150), ou dans lequel le dispositif de chargement comprend un câble multiconducteur (152) dont les conducteurs prévoient la liaison électrique de feux arrière ainsi qu'une liaison de réseau de bord commutable ou non commutable, dans lequel l'élément de branchement électrique est réalisé sous la forme de prises électriques (162) qui entrent en contact avec les conducteurs qui prévoient une liaison de réseau de bord, ou l'élément de branchement électrique est réalisé comme un prolongement de ceux des conducteurs qui prévoient la liaison de réseau de bord.

5. Dispositif de chargement selon l'une quelconque des revendications précédentes, comprenant en outre : un contrôleur de charge (100) conçu pour contrôler la charge d'un vélo électrique, le contrôleur de charge étant relié à la borne de sortie, le contrôleur de charge comprenant de préférence un convertisseur de tension, un régulateur de charge, un dispositif de protection contre la décharge, un dispositif de protection contre la surintensité de courant, un ampèremètre pour détecter un courant de charge, un dispositif de surveillance de courant de charge pour détecter l'état de charge ou une combinaison de ceux-ci.

6. Elément de branchement électrique prévu comme une pièce intermédiaire (120), comprenant une première face de contact (124) réalisée selon un branchement de remorque électrique côté remorque et une deuxième face de contact (126), opposée, réalisée selon un branchement de remorque électrique côté véhicule automobile, dans lequel la pièce intermédiaire présente des liaisons électriques (128) individuelles, relie les éléments de contact de la pièce intermédiaire côté remorque et côté véhicule automobile les uns aux autres respectivement, et la pièce intermédiaire présente en outre des prises (140) qui sont reliées aux éléments de contact qui correspondent à la masse et au pôle positif du réseau de bord, les prises (140) étant reliées à la pièce intermédiaire par au moins un ensemble de connecteur électrique (170) qui est conçu pour être relié de manière amovible à un ensemble de connecteur complémentaire (180) d'un câble de chargement (100) pour vélos électriques.

7. Elément de branchement électrique selon la revendication 6, dans lequel ledit au moins un ensemble de connecteur existant au niveau de la pièce intermédiaire (120) est réalisé sur une face extérieure de la pièce intermédiaire entre la première et la deuxième face de contact (124, 126).

8. Chargeur pour vélos électriques, dans lequel le chargeur (100) comprend un contrôleur de charge et un câble d'alimentation relié à celui-ci (110) qui présente à l'extrémité éloignée du contrôleur de charge un élément de branchement électrique avec des éléments de liaison électriques dont la forme et la disposition correspondent aux éléments de liaison d'un branchement de remorque électrique côté remorque d'un attelage de véhicule automobile,
dans lequel l'élément de branchement électrique de celui-ci selon la revendication 6 ou 7 est réalisé comme une pièce intermédiaire (120), le câble d'alimentation du chargeur étant relié solidement à l'élément de branchement électrique ou est relié à l'élément de branchement électrique par une connexion enfichable électrique amovible (170, 180).

9. Chargeur selon la revendication 8, comprenant en outre : un dispositif de surveillance de courant de charge, le dispositif de surveillance de courant de charge étant de préférence conçu pour produire des données d'affichage concernant l'état de charge d'au moins l'un des vélos électriques pouvant être connectés et pour les transmettre à l'habitacle du véhicule.
